# EUROPEAN PATENT APPLICATION

(11) **EP 1 971 038 A1**
(43) Date of publication of application: **17.09.2008**
(21) Application number: 07701958.6
(22) Date of filing: 05.01.2007
(51) Int. Cl.: H04B 1/74

(54) **METHOD AND DEVICE FOR TRANSMISSION SERVICE USING BACKPLANE SERVICE BUSES**

(30) Priority: 05.01.2006 CN 200610005639
(71) Applicant: Huawei Technologies Co., Ltd., Longgang District Shenzhen Guangdong 518129 (CN)
(72) Inventor: CHEN, Jinzhu, Guangdong 518129 (CN)
(74) Representative: Hengelhaupt, Jürgen
(86) International application number: PCT/CN2007/000026
(87) International publication number: WO 2007/076728

(57) **Abstract**

A method for transmission service using backplane service buses comprises the following steps: the service received from backplane interface is distributed into different services; the first backplane service bus and the second backplane service bus in the uplink interface of the backplane transmit the different services simultaneously; the first backplane service bus and the second backplane service bus in the downlink interface of the backplane transmit the different services simultaneously. A device for transmission service using backplane service buses comprises the first service board, the second service board, the first cross board, the second cross board and a service distributing unit. The service distributing unit is used to distribute the received service into different services, and control the first and second service boards to transmit the distributed different service to the first cross board and the second cross board simultaneously via different backplane service buses. The first cross board and second cross board transmit the cross service to the second and first service boards simultaneously. The second and first service boards receive the transmitted different service simultaneously.

## Description

This application claims priority from the Chinese Patent Application No. 200610005639.4, filed with the Chinese Patent Office on January 5, 2006, entitled "METHOD AND SYSTEM FOR IMPROVING USE FACTOR OF BACKPLANE SERVICE BUS", contents of which are incorporated herein by reference in their entirety.

### FIELD OF THE INVENTION

The present invention relates to the field of service processing in a communication transmission device system, and in particular to a method and apparatus for transmitting a service using backplane service buses.

### BACKGROUND OF THE INVENTION

In a communication transmission device system, there are numerous service processing boards, i.e., service boards, which are single boards for service processing functions. The service boards include a line board, a cross board, a Resilient Packet Ring (RPR) single board, an Ethernet service board, an Asynchronous Transfer Mode (ATM)/Inverse Multiplexing over ATM (IMA) service board, etc. Here, the line board is a service single board for data transmission of Synchronous Digital Hierarchy (SDH); the cross board is a single board for service crossing; the RPR single board is a service single board for RPR functions; the Ethernet service board is a service single board for Ethernet data transmission; the ATM service single board is a service single board for digital transmission of a wideband integrated service; and the IMA service single board is a service single board, which multiplexes reversely an ATM cell stream to multiple physical connections on the basis of cell for transmission, and which restores cell streams transmitted over different physical connections into a single cell stream at a remote end. Multiple single boards are correlated to constitute a backplane. A backplane is usually provided with numerous plug-ins on which other single boards are plugged. The single boards plugged on the backplane constitute a system, and can enable functions of information exchange, configuration management, powering a single board, etc., by means of the backplane.

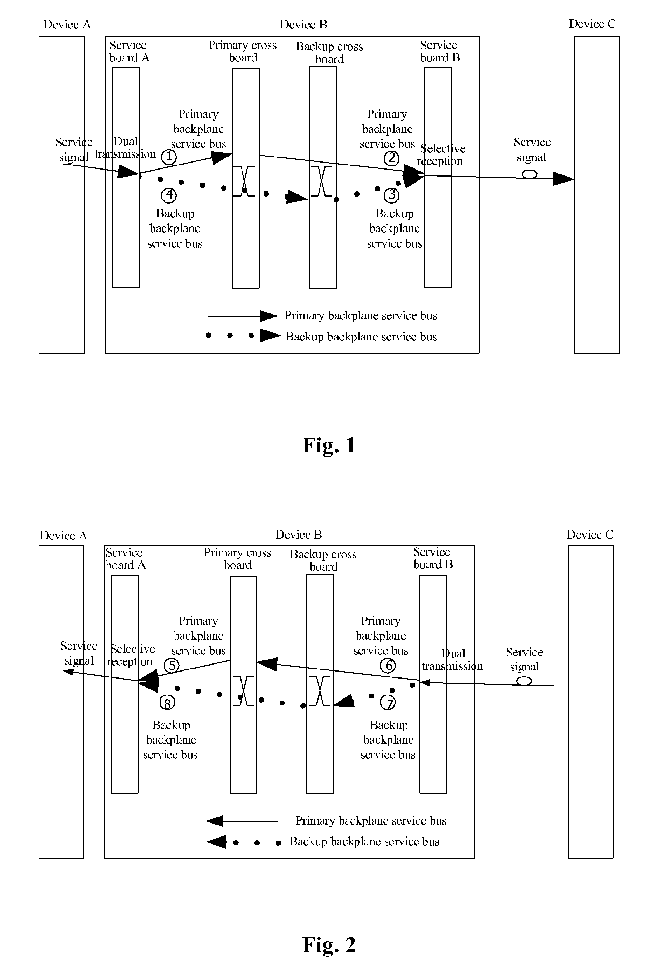

In a communication transmission device system, there are two cross boards present in the system, one is a primary cross board, and the other is a backup cross board. As illustrated in figure 1 which is a schematic diagram of typical uplink service processing in the prior art, a procedure for uplink service processing in the system is as follows: a service signal transmitted from a device A is received through a receiving service board A with corresponding functions and is processed, and then identical services are concurrently transmitted to a primary cross board and a backup cross board respectively through a primary backplane service bus① and a backup backplane service bus④ (that is, the services of ① and ④ are identical). If the primary cross board operates normally, a line service board B receives selectively services crossed by the primary cross board through a primary backplane service bus②, and transmits the service to a remote device C, and if the primary cross board operates abnormally, and the backup cross board operates normally, the line service board B receives selectively services crossed from the backup cross board through a backup backplane service bus③, and transmits the services to the remote device C. That is, the service board A concurrently transmits received services to both the primary cross board and the backup cross board, and the line service board B receives selectively the services from the primary cross board or the backup cross board.

As illustrated in figure 2 which is a schematic diagram of typical downlink service processing in the prior art, a procedure for downlink service processing in the system is as follows: a service signal transmitted from a device C is received through a line service board B and is processed, and then identical services are concurrently transmitted to a primary cross board and a backup cross board respectively through a primary backplane service bus⑥ and a backup backplane service bus⑦ (that is, the service of ⑥ and ⑦ are identical). If the primary cross board operates normally, the service board A receives selectively services crossed by the primary cross board through a primary backplane service bus⑤, and transmits the services to a device A after processing, and if the primary cross board operates abnormally, and the backup cross board operates normally, the service board A receives selectively services crossed from the backup cross board through a backup backplane service bus⑧, and transmits the services to the device A after processing. That is, the line service board B concurrently transmits received services to both the primary cross board and the backup cross board, the service board A receives selectively the services from the primary cross board or the backup cross board.

As illustrated above, in the prior art system, there are primary and backup cross boards, as well as primary and backup backplane service buses for each service single board. The system determines whether a service single board uses a primary backplane service bus or a backup backplane service bus based on status of the primary and backup cross boards. For a backplane of each service single board, dual transmission (transmitting identical services) is performed in the uplink (service board → cross board) interface direction, while selective reception is performed in the downlink (cross board →service board) interface direction. The bandwidths for primary and backup service buses of the uplink and downlink backplanes are identical, a backup bus only serves as a protection bus for a primary bus, and a backup cross board only serves as a protection single board for a primary cross board. The inventors have observed during making the invention that differentiating service buses for a backplane of a service single board as primary and backup may result in poor use factor of the system buses.

### SUMMARY OF THE INVENTION

Embodiments of the invention provide a method and apparatus for transmitting service using backplane service buses so as to address the problem of inefficient utilization of backplane service buses in the prior art.

To solve the above mentioned problem, an embodiment of the present invention provides a method for transmitting a service using backplane service buses, including:
distributing, by a backplane, a received service into different services;
concurrently transmitting the different services through a first backplane service bus and a second backplane service bus in an uplink interface direction of the backplane;
concurrently transmitting the different services through a first backplane service bus and a second backplane service bus in a downlink interface direction of the backplane.

Another embodiment of the present invention provides an apparatus for transmitting a service using backplane service buses, comprising a first service board, a first cross board, a second cross board, a second service board, and a service distributing unit, the service boards and the cross boards being connected through the backplane buses, wherein
the service distributing unit is adapted to distribute a received service and control the first service board or the second service board to concurrently transmit the distributed different services to the first cross board and the second cross board respectively through different backplane service buses;
the first cross board and the second cross board are respectively adapted to cross the received services and concurrently transmit the crossed services to the second service board or the first service board;
the second service board or the first service board are adapted to concurrently receive the services transmitted from the first cross board and the second cross board through the backplane service buses according to the control of the service distributing unit.

As known from the technical solutions disclosed above, the service board in the embodiments of the invention can be implemented by a data single board, a branch single board, a line board, a Resilient Packet Ring (RPR) single board, an Ethernet service board, and a service board of Asynchronous Transfer Mode/Inverse Multiplexing over Asynchronous Transfer Mode. Firstly, a backplane distributes a received service into different services; then, a service board concurrently transmits the different services to a first cross board and a second cross board through a first backplane service bus and a second backplane service bus in an uplink interface direction, and concurrently transmits the different services from the first cross board and the second cross board through a first backplane service bus and a second backplane service bus in a downlink interface direction. Thus, compared with the prior art that a service board only selectively receives a service of a primary cross board or a backup cross board through a primary backplane bus or a backup backplane bus, embodiments of the present invention effectively improve the use factor of backplane service buses. For instance, for an uplink service, the first cross board and the second cross board operate concurrently so that both function as a primary single board. In this regard, the uplink bandwidth of the backplane of the first service board is doubled, and the downlink bandwidth of the second service broad is doubled, that is, bandwidth utilized for the backplane can be twice as of the prior art, but will not be limited to this.

### BRIEF DESCRIPTIONS OF THE DRAWINGS

The drawings described here are provided to present further understanding of the invention and constitute a part of this application, but are not to limit the invention. In the drawings:
Fig. 1 is a schematic diagram of uplink service processing in the prior art;
Fig. 2 is a schematic diagram of downlink service processing in the prior art;
Fig. 3 is a schematic diagram showing the structure of an apparatus for transmitting a service using backplane service buses according to an embodiment of the invention;
Fig. 4 is a flow chart showing the method for transmitting a service using backplane service buses according to an embodiment of the invention;
Fig. 4A is a flow chart of transmitting a service using backplane service buses in an uplink interface direction of a backplane in the method of Fig.4;
Fig. 4B is a flow chart of transmitting a service using backplane service buses in a downlink interface direction of a backplane in the method of Fig.4;
Fig. 5 is a flow chart of processing an uplink service according to a first embodiment of the invention; and
Fig. 6 is a flow chart of processing a downlink service according to a second embodiment of the invention.

### DETAILED DESCRIPTIONS OF THE EMBODIMENTS

Embodiments of the invention will be described in detail hereinafter with reference to the drawings. Here, the illustrative embodiments of the invention and descriptions thereof are intended to explain the invention, but in no way to limit the invention.

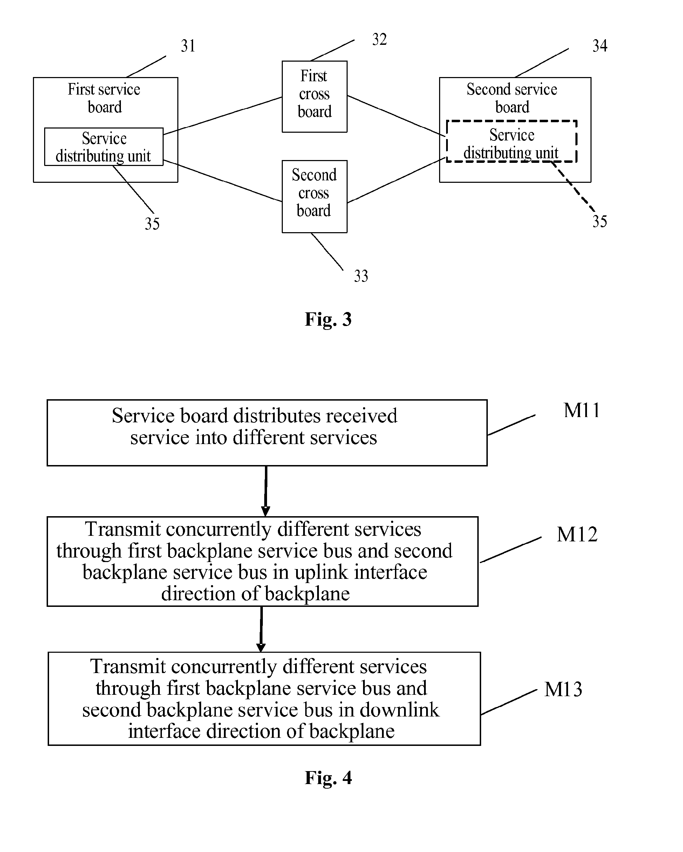

Referring to figure 3 which is a schematic diagram showing the structure of an apparatus for transmitting a service using backplane service buses according to an embodiment of the invention. The apparatus includes a first service board 31, a first cross board 32, a second cross board 33, a second service board 34, and a service distributing unit 35, where the service boards are connected with the cross boards through backplane buses. In the embodiment of the invention, the service distributing unit 35 can be located on a backplane, or in the first service board 31, or in the second service board 34 (as represented by the broken line), or can be located on both the first service board 31 and the second service board 34, but will not be limited to the disclosed structure.

The service distributing unit 35 is adapted to distribute a received service into different services and control the first service board 31 or the second service board 34 to concurrently transmit the distributed services to the first cross board 32 and the second cross board 33 respectively through a first backplane service bus and a second backplane service bus. The first cross board and the second cross board cross the received services respectively and then concurrently transmit to the second service board 34 or the first service board 31. The second service board 34 or the first service board 31 concurrently receives the services transmitted through the backplane service buses from the first cross board and the second cross board under the control of the service distributing unit 35. However if the second service board 34 or the first service board 31 is provided with a service board capable of selective receiving, it is also possible to selectively receive or totally receive the transmitted incoming services.

If the service distributing unit 35 is located on the first service board 31, it is adapted to distribute a service received by the first service board into different services and concurrently transmit the services to the first cross board and the second cross board respectively through the first backplane service bus and the second backplane service bus. If the service distributing unit 35 is located on the second service board 34, it is adapted such that the second service board totally receives or selectively receives the services from the first backplane service bus and the second backplane service bus based on the way in which the first service board transmits services. The first service board 31, the second service board 34, and the service distributing unit 35 are integrated on a same service board.

The service distributing unit includes at least one of the followings: a data single board, a branch single board, a line board, a Resilient Packet Ring (RPR) single board, an Ethernet service board, and a service board of Asynchronous Transfer Mode (ATM)/Inverse Multiplexing over ATM (IMA), and is adapted to concurrently transmit services to the first cross board and the second cross board through a first backplane service bus and a second backplane service bus in an uplink interface direction, and to concurrently transmit services from the first cross board and the second cross board through a first backplane service bus and a second backplane service bus in a downlink interface direction.

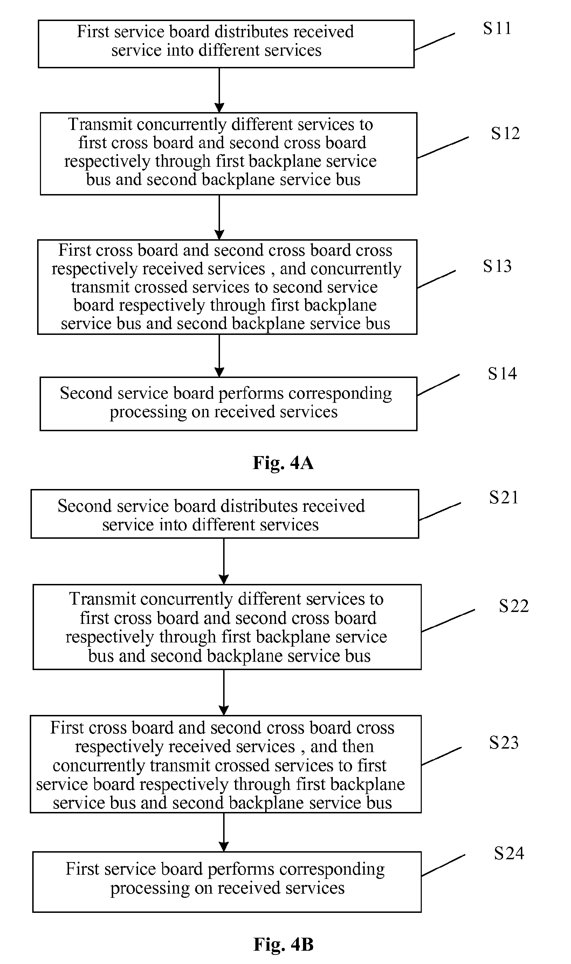

Further referring to figure 4 which showing the method for transmitting a service using backplane service buses according to an embodiment of the invention, the method includes the following:
Process M11, a service board distributes a received service into different services;
Process M12, the different services are concurrently transmitted through a first backplane service bus and a second backplane service bus in an uplink interface direction of a backplane.
Process M13, the different services are concurrently transmitted through a first backplane service bus and a second backplane service bus in a downlink interface direction of the backplane.

Specific procedures of the method are illustrated further with reference to figure 4A and figure 4B, which are respectively flow charts showing the method for transmitting a service using backplane service buses in transmission of unlink and downlink services.

Referring to figure 4A, the method includes the following processes.
Process S11, a first service board distributes a received service into different services;
Process S12, the distributed different services are concurrently transmitted to a first cross board and a second cross board respectively through a first backplane service bus and a second backplane service bus;
Process S13, the first cross board and the second cross board respectively cross the received services, and then concurrently transmit the crossed services to a second service board respectively through the first backplane service bus and the second backplane service bus;
Process S14, the second service board correspondingly processes the received services.

Referring to figure 4B, the method includes the following steps in transmission of a downlink service:
Process S21, the second service board distributes a received service into different services;
Process S22, the distributed different services are concurrently transmitted to the first cross board and the second cross board respectively through the first backplane service bus and the second backplane service bus.
Process S23, the first cross board and the second cross board respectively cross the received services, and then concurrently transmit the crossed services to the first service board respectively through the first backplane service bus and the second backplane service bus;
Process S24, the first service board correspondingly processes the received services.

Further, in transmission of an uplink or downlink service, the service to be transmitted can also be firstly distributed into different services, and then the distributed services are transmitted to the first cross board and the second cross board through the first service board or the second service board. The procedure subsequent to this is the same as in the above procedure, therefore description thereof will not be repeated here.

For the understanding of those skilled in the art, now the invention will be described with reference to specific embodiments thereof For a better understanding, the first cross board and the second cross board as mentioned in the above embodiments correspond to a cross board A and a cross board B in the following embodiments, the first backplane service bus and the second backplane service bus respectively correspond to a backplane service bus, and the first service board and the second service board respectively correspond to a service board A and a service board B.

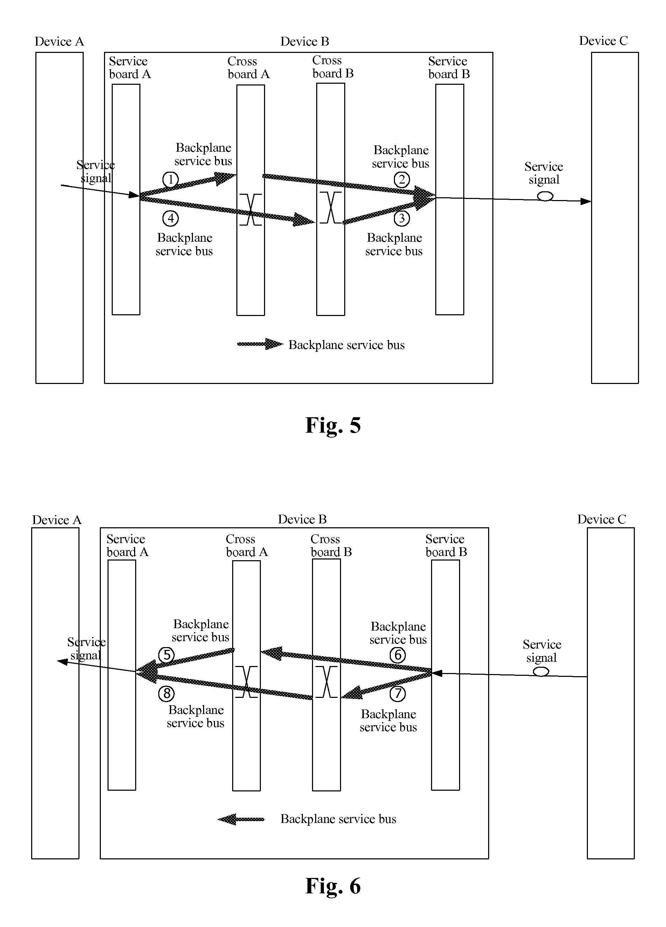

Referring to figure 5 which is a flow chart of processing an uplink service according to the first embodiment of the invention, and a specific implementation thereof includes the following processes.
S51: A service signal transmitted from a device A is received through the service board A having a receiving function and is processed, then is distributed into different services by a service distributing functional unit integrated in the service board A;
S52: The service board A concurrently transmits the different services to the cross board A and the cross board B respectively through a backplane service bus① and a backplane service bus④;
S53: The cross board A and the cross board B operate concurrently to perform corresponding service crossing, and transmit the crossed services respectively to the service board B having a receiving function through a backplane service bus② and a backplane service bus③;
S54: The service board B concurrently receives the two different services from the cross board A and the cross board B through the backplane service bus② and the backplane service bus③, and transmits the services to a device C after processing.

In the processing procedure of the first embodiment, the cross board A and the cross board B operate concurrently and both function as primary cross boards. Different services are transmitted in the backplane service buses① and ④, that is, the bandwidth in the uplink interface direction of the backplane of the service board A is doubled. Different services are transmitted in the backplane service buses② and ③, the service board B concurrently receives services transmitted through the backplane service buses② and ③ by the cross board A and the cross board B, the bandwidth in the downlink interface direction of the backplane of the service board B is doubled.

In this embodiment, the service board A functions as a receiving service board to receive services transmitted from the device A, and is integrated with a service distributing functional unit which is adapted to distribute a service into different services and transmit the distributed services through the backplane service bus① and the backplane service bus④.

The backplane service bus① and the backplane service bus④ transmit the different services distributed by the service board A respectively to the cross board A and the cross board B. The cross board A performs service crossing on services transmitted through the backplane service bus① and transmits the crossed services to the service board B through the backplane service bus②. The cross board B performs service crossing on services transmitted through the backplane service bus④and transmits the crossed service to the service board B through the backplane service bus③.

The service board B functions as a transmitting service board to concurrently receive services transmitted from the cross board A and the cross board B through the backplane service buses② and ③. The service board B is integrated with a service distributing functional unit. Since the receiving service board A distributes received services into different services, the service board B receives all the services transmitted through the backplane service buses② and ③, and transmits them to the apparatus C after processing.

Further, in the apparatus according to this embodiment, the service board A functions as a receiving service board to receive services transmitted from the device A. Same services can be distributed to the primary backplane service bus① and the backup backplane service bus④ by an integrated service distributing functional unit for concurrently transmitting;

The primary backplane service bus① and the backup backplane service bus④ transmit the same services distributed by the service board A respectively to the primary cross board A and the backup cross board B; The primary cross board A performs service crossing on services transmitted through the primary backplane service bus①, and transmits the crossed services to the service board B through the primary backplane service bus②; the backup cross board B performs service crossing on services transmitted through the backup backplane service bus④, and transmits the crossed services to the service board B through the backup backplane service bus③;

The service board B functions as a transmitting service board integrated with a service distributing functional unit. Since the transmitting service board A transmits same services respectively through the primary backplane service bus② and the backup backplane service bus③, the service board B selectively receives the services transmitted from the primary cross board A through the primary backplane service bus② and the services transmitted from the backup cross board B through the backup backplane service bus③ and transmits them to the device C, thereby achieving in the commutation system the service transmission with primary and backup cross protection. That is, this embodiment integrates crossed primary protection and backup protection.

The functions of receiving services, transmitting services, and distributing services can be integrated in a same service board. In the device B of the first embodiment, both the service board A and the service board B are integrated with functions of receiving services and transmitting services, as well as a function of service distributing. In processing an uplink service, the service board A is adapted for receiving services, and the service board B is adapted for transmitting services. In the second embodiment below, the service B is adapted for receiving services, and the service board A is adapted for transmitting services, to process downlink services of the system.

Further referring to figure 6 which is a flow chart of processing a downlink service according to the second embodiment of the invention, a specific implementation includes the following processes:
S61: A service signal transmitted from the device C is received through the service board B having a receiving function and is processed, then is distributed into different services by the service distributing functional unit integrated in the service board B;
S62: The service board C concurrently transmits the different services to the cross board A and the cross board B respectively through a backplane service bus⑥ and a backplane service bus⑦;
S63: The cross board A and the cross board B operate concurrently to perform corresponding service crossing, and transmit the crossed services to the service board A having a receiving function through a backplane service bus⑤ and a backplane service bus ⑧.
S64: The service board A concurrently receives the two different services from the cross board A and the cross board B through the backplane service bus⑤ and the backplane service bus⑧, and transmits the services to the device C after processing.

Specifically, in the processing procedure of the second embodiment, the cross board A and the cross board B operate concurrently and both function as a primary cross single board. Different services are transmitted in the backplane service buses⑥ and ⑦, so that the bandwidth in the uplink interface direction of the backplane of the service board B is doubled. Different services are transmitted in the backplane service buses⑤ and ⑧, and the service board A concurrently receives the services transmitted by the cross board A and the cross board B through the backplane service buses⑤ and ⑧, so that the bandwidth in the downlink interface direction of the backplane of the service board A is doubled.

In this second embodiment, the service board B functions as a receiving service board to receive services transmitted from the device C, and is integrated with the service distributing functional unit which distributes the services into different services and transmit the distributed services through the backplane service buses⑥ and ⑦.

The backplane service bus⑥ and the backplane service bus⑦ transmit the different services distributed by the receiving service board B respectively to the cross board A and the cross board B. The cross board A performs service crossing on services transmitted through the backplane service bus⑥, and transmits the crossed services to the service board A through the backplane service bus⑤. The cross board B performs service crossing on services transmitted through the backplane service bus⑦, and transmits the crossed services to the service board A through the backplane service bus⑧.

The service board A functions as a transmitting service board to receive services transmitted from the cross board A and the cross board B through the backplane service buses ⑤ and ⑧. Since the transmitting service board B distribute the received services into different services, the service board A receives all the services transmitted through the backplane service buses⑤ and ⑧, and transmits them to the device A after processing.

Further, in the apparatus according to this embodiment, the service board B functions as a receiving service board to receive services transmitted from the device C. Same services can be distributed by an integrated service distributing functional unit respectively to the primary backplane service bus⑥ and the backup backplane service bus⑦ for concurrent transmitting;

The primary backplane service bus⑥ and the backup backplane service bus⑦ transmit the same services distributed by the receiving service board A respectively to the primary cross board A and the backup cross board B. The primary cross board A performs service crossing on the services transmitted through the primary backplane service bus⑥, and transmits the crossed services to the service board A through the primary backplane service bus⑤. The backup cross board B performs service crossing on the services transmitted through the backup backplane service bus⑦, and transmits the crossed services to the service board A through the backup backplane service bus⑧.

The service board A functions as a transmitting service board. Since the receiving service board B transmits same services respectively through the primary backplane service bus⑤ and the backup backplane service bus⑦, the service board A selectively receives the services transmitted from the primary cross board A through the primary backplane service bus⑤ and the service transmitted from the backup cross board B through the backup backplane service bus⑧, achieving in the commutation system the service transmission with primary and backup cross protection. That is, this embodiment integrates crossed primary protection and backup protection.

The forgoing descriptions are merely the embodiments of the invention, but not to limit the invention. Any modification, equivalent substitution and improvement made within the spirit and scope of the invention shall be encompassed in the scope of the invention.

## Claims

1. A method for transmitting a service using backplane service buses, comprising:
distributing a service received by a backplane into different services;
concurrently transmitting the different services through a first backplane service bus and a second backplane service bus in an uplink interface direction of the backplane; and
concurrently transmitting the different services through a first backplane service bus and a second backplane service bus in a downlink interface direction of the backplane.

2. The method for transmitting a service using backplane service buses according to claim 1, comprising specific processes of:
distributing, by a first service board, a received uplink service into different services;
concurrently transmitting the distributed different services to a first cross board and a second cross board respectively through the first backplane service bus and the second backplane service bus;
crossing, by the first cross board and the second cross board respectively, the received services, and concurrently transmitting the crossed services to a second service board respectively through the first backplane service bus and the second backplane service bus.

3. The method for transmitting a service using backplane service buses according to claim 1, comprising specific processes of:
distributing, by a second service board, a received downlink service into different services;
concurrently transmitting the distributed different services to a second cross board and a first cross board respectively through the second backplane service bus and the first backplane service bus;
crossing, respectively by the second cross board and the first cross board, the received services, and concurrently transmitting the crossed services to a first service board respectively through the second backplane service bus and the first backplane service bus.

4. An apparatus for transmitting a service using backplane service buses comprising a first service board, a first cross board, a second cross board, and a second service board, the service boards and the cross boards being connected through backplane buses, wherein the apparatus further comprises:
a service distributing unit adapted to distribute a received service into different services, and to control the first service board or the second service board to concurrently transmit the distributed different services to the first cross board and the second cross board respectively through different backplane service buses; wherein
the first cross board and the second cross board are adapted to cross the received services respectively, and to concurrently transmit the crossed services to the second service board or the first service board;
the second service board or the first service board is adapted to concurrently receive services transmitted from the first cross board and the second cross board through the backplane service buses according to the control of the service distributing unit.

5. The apparatus for transmitting a service using backplane service buses according to claim 4, wherein the different backplane service buses comprise at least a first backplane service bus and a second backplane service bus.

6. The apparatus for transmitting a service using backplane service buses according to claim 4, wherein the service distributing unit is located on the first service board, and is adapted to concurrently transmit the different services to the first cross board and the second cross board.

7. The apparatus for transmitting a service using backplane service buses according to claim 4, wherein the service distributing unit is located on the second service board, and is adapted to concurrently receive the services crossed respectively by the first cross board and the second cross board, according to the way in which the first service board transmits a service.

8. The apparatus for transmitting a service using backplane service buses according to claim 4, wherein the first service board, the second service board, and the service distributing unit are integrated on a same service board.

9. The apparatus for transmitting a service using backplane service buses according to any one of claims 4, 6, 7 and 8, wherein the service distributing unit comprises at least one of a data single board, a branch single board, a line board, a Resilient Packet Ring single board, an Ethernet service board, and a service board of Asynchronous Transfer Mode/Inverse Multiplexing over Asynchronous Transfer Mode, and is adapted to concurrently transmit the services to the first cross board and the second cross board through the first backplane service bus and the second backplane service bus in the uplink interface direction, and to concurrently transmit the services from the first cross board and the second cross board through the first backplane service bus and the second backplane service bus in a downlink interface direction.
